# EUROPÄISCHE PATENTSCHRIFT

(11) **EP 3 522 307 B1**
(45) Veröffentlichungstag und Bekanntmachung des Hinweises auf die Patenterteilung: **19.08.2020**
(21) Anmeldenummer: 19000005.9
(22) Anmeldetag: 08.01.2019
(51) Int. Cl.: H01R 13/58, H02G 15/007, H02G 3/32, H01R 9/05

(54) **KABELZUGENTLASTUNG UND SCHIRMBEFESTIGUNG BEI EINEM STECKVERBINDERGEHÄUSE**
CABLE STRAIN RELIEF AND SHIELD FIXING IN A CONNECTOR HOUSING
DISPOSITIF DE DÉCHARGE DE TRACTION DU CÂBLE ET FIXATION DE BLINDAGE D'UN BOITIER DE CONNECTEUR ENFICHABLE

(30) Priorität: 05.02.2018 DE 102018102464
(43) Veröffentlichungstag der Anmeldung: 07.08.2019
(73) Patentinhaber: HARTING Electric GmbH & Co. KG, 32339 Espelkamp (DE)
(72) Erfinder: Schönfeld, Alexander, 49086 Osnabrück (DE); Deimel, Romano, 31603 Diepenau (DE)

(56) Entgegenhaltungen:
- DE-U1-202015 101 480
- JP-U- S49 141 992
- US-A- 3 363 864
- US-A1- 2005 106 948

## Beschreibung

Die Erfindung geht aus von einem Steckverbindergehäuse nach der Gattung des unabhängigen Anspruchs 1.

Derartige Steckverbindergehäuse werden insbesondere in Reinraumumgebungen eingesetzt. In derartigen Umgebungen kommt es vor allem auf eine komfortable Konfektionierung von Steckverbindern mit derartigen Steckverbindergehäusen an. Eine gute Mediendichtigkeit, wie sie in anderen Einsatzfällen häufig gefordert ist, steht hier nicht im Vordergrund.

### Stand der Technik

In so genannten Reinräumen gelten ganz besondere Schutzbedingungen. In solchen Räumen werden beispielsweise Halbleiter gefertigt. Die Konzentration an Keimen und Luftpartikel muss in derartigen Räumen extrem geringgehalten werden. Daher müssen Personen, die in diesen Räumen arbeiten, auch spezielle Schutzkleidung tragen, die beispielsweise in der WO 1999/006136 A1 gezeigt ist.

Die DE 20 2015 101480 U1 zeigt ein Befestigungsbauteil zum Befestigen wenigstens eines oder mehrerer elektrischer Leiter oder Kabel, mit einem Halteelement, an dem das Kabel mittels eines Befestigungsmittels lösbar befestigbar ist.

Die JP S49 141 992 U zeigt ein Bauteil mit einem U-förmigen Querschnitt. An den Innenflächen des Bauteils kann jeweils ein Kabel mithilfe einer Kabelschelle fixiert werden.

Die US 3,363,864 zeigt ein U-förmiges Befestigungsblech für Kabel. An den Seitenflächen können Kabel mithilfe von davon abstehenden Laschen fixiert werden.

In den Reinräumen befinden sich Produktionsmaschinen, die über Steckverbinder miteinander verbunden sind. Über ggf. weitere Steckverbinder werden die Produktionsmaschinen mit Steuersignalen und/oder einer Betriebsspannung versorgt. Die Konfektionierung der Steckverbinder mit einer für den Reinraum geeigneter Schutzkleidung ist besonders schwierig und oft langwierig. Dadurch entstehen häufig zeitliche Verzögerungen im Produktionsprozess.

### Aufgabenstellung

Die Aufgabe der Erfindung besteht darin ein Steckverbindergehäuse vorzuschlagen, welches eine einfache Konfektionierung eines Steckverbinders erlaubt.

Die Aufgabe wird durch den Gegenstand des unabhängigen Anspruchs 1 gelöst.

Vorteilhafte Ausgestaltungen der Erfindung sind in den Unteransprüchen angegeben.

Das erfindungsgemäße Steckverbindergehäuse ist insbesondere für den Einsatz von so genannten schweren Steckverbindern (auch Industriesteckverbinder genannt) konzipiert. Ein solcher Steckverbinder ist exemplarisch in der WO 2017/174069 A1 gezeigt. Industriesteckverbinder sind in der Regel mit einem metallischen Gehäuse ausgestattet und werden häufig in rauen Umgebungen und insbesondere zur Übertragung hoher Ströme eingesetzt. Ein mit einem erfindungsgemäßen Steckverbindergehäuse ausgestatteter Steckverbinder soll insbesondere in Reinraumumgebungen einsetzbar sein.

Das Steckverbindergehäuse weist ein Kabelanschlusselement auf. An dem Kabelanschlusselement können die am Steckverbinder angeschlossenen Kabel befestigt werden. Das Kabelanschlusselement ist dazu ausgelegt zumindest zwei Kabel, zumindest ein erstes Kabel und zumindest ein zweites Kabel, zur Schirmanbindung und/oder Zugentlastung zu befestigen. Insofern könnte man das Kabelanschlusselement auch mit den Begriffen Zugentlastung und/oder Schirmanbindung belegen.

Das Kabelanschlusselement weist unterschiedliche Befestigungsebenen für das zumindest eine erste Kabel und das zumindest eine zweite Kabel auf. Betrachtet man die Steckseite des Steckverbindergehäuses als Bodenebene, so befindet sich eine Befestigungsebene oberhalb der anderen Befestigungsebene. Die beiden Befestigungsebenen besitzen eine unterschiedliche Entfernung zum Steckgesicht des Steckverbinders. Die beiden Befestigungsseiten sind in Steckrichtung zueinander versetzt angeordnet.

Bekanntermaßen befindet sich an einem Steckverbindergehäuse kabelanschlussseitig ein so genannter Kabelabgang. Durch den Kabelabgang kann ein an den Steckverbinder angeschlossenes Kabel geführt und über eine so genannte Kabelverschraubungzugentlastet und auch mediendicht abgedichtet werden. Ein Eingriff in das Steckverbindergehäuse über den Kabelabgang ist nicht möglich. Vorzugsweise ist das Steckverbindergehäuse kabelanschlussseitig offen ausgeführt. Mit "offen" ist in diesem Fall gemeint, dass ein direkter Eingriff in das Steckverbindergehäuse möglich ist. Ein Benutzer kann ohne bauliche Hindernisse in das Gehäuse hineingreifen und Montagearbeiten vornehmen. Beim erfindungsgemäßen Steckverbindergehäuse fehlt anschlussseitig der gesamte Gehäusedeckel nebst Kabelabgang. Auch ein Teil der Seitenwände, insbesondere der Schmalseiten, kann fehlen.

Das Kabelanschlusselement ragt vorzugsweise durch die offene Anschlussseite des Steckverbindergehäuses hindurch. Ein Teil des Kabelanschlusselements befindet sich innerhalb des Steckverbindergehäuses und ein Teil des Kabelanschlusselements ist außerhalb des Steckverbindergehäuses angeordnet. Vorzugsweise besteht das Kabelanschlusselement aus einem flachen Material mit einer S-förmigen Grundfläche und daran angeformten und senkrecht davon abstehenden Befestigungsflächen. Das Kabelanschlusselement wird dann idealerweise in einem Stanz-Biegeverfahren hergestellt. Dadurch kann das Kabelanschlusselement besonders preisgünstig hergestellt werden.

Vorteilhafterweise sind die beiden Befestigungsflächen des Kabelanschlusselements auf unterschiedlichen Befestigungsebenen angeordnet. Die Befestigungsflächen sind in Steckrichtung gesehen versetzt zueinander angeordnet und parallel zueinander. Quer zur Steckrichtung gesehen weisen die Befestigungsflächen einen Abstand zueinander auf. Durch diese Geometrie ist es möglich bei vorliegenden Bauraum möglichst viele anzuschließende Kabel am Kabelanschlusselement zu befestigen und gleichzeitig noch ausreichend Platz zur händischen Fixierung der Kabel zu haben.

Vorzugsweise sind das zumindest erste Kabel und das zumindest zweite Kabel gegenüberliegend anordnenbar bzw. fixierbar. Das erste Kabel ist dann an der ersten Befestigungsfläche und das zweite Kabel ist an der zweiten Befestigungsfläche des Kabelanschlusselements fixiert. Durch die gegenüberliegende und übereinander angeordnete Fixierung der ersten und zweiten Kabel am Kabelanschlusselement ist eine besonders platzsparende Fixierung der Kabel am Steckverbindergehäuse möglich. Außerdem sind die einzelnen Kabel bei der Konfektionierung leicht erreichbar. Dadurch wird die Konfektionierung eines Steckverbinders vereinfacht.

Es ist von Vorteil, wenn das Kabelanschlusselement aus einem elektrisch leitfähigen Material besteht. In diesem Fall kann das Kabelanschlusselement zur Schirmanbindung der anzuschließenden Kabel verwendet werden, insbesondere dann, wenn das Steckverbindergehäuse auch aus einem elektrisch leitfähigem Material besteht.

In einer vorteilhaften Variante der Erfindung ist an den Befestigungsflächen des Kabelanschlusselements jeweils zumindest eine Schelle vorgesehen, mit welcher die anzuschließenden Kabel an dem Kabelanschlusselement fixierbar sind. Die Schellen können beispielsweise über das Schirmgeflecht eines anzuschließenden Kabels gelegt sein. Die Schelle kann aber auch auf dem weichen Kabelmantel des anzuschließenden Kabels aufliegen und diesen leicht eindrücken, so dass eine besonders gute Zugentlastung gewährleistet ist. Durch die Schelle ist insgesamt eine variable und einfache Fixierung des Kabels am Kabelanschlusselement gewährleistet.

Das Steckverbindergehäuse hat einen rechteckigen Querschnitt mit zwei gegenüberliegenden Schmalseiten und zwei gegenüberliegenden Breitseiten. Die Breitseiten bilden die Seitenflächen des Steckverbindergehäuses. Vorteilhafterweise ist eine Befestigungsfläche des Kabelanschlusselements an einer Seitenfläche und die andere Befestigungsfläche des Kabelanschlusselements an der anderen Seitenfläche des Steckverbindergehäuses fixierbar. Die Fixierung wird vorzugsweise durch eine Schraubverbindung realisiert.

Vorzugsweise wird eine Befestigungsfläche über zumindest einen Steg an der Seitenfläche des Steckverbindergehäuses fixiert. Hierbei handelt es sich um die Befestigungsfläche, die aus dem Steckverbindergehäuse herausragt. Der Steg besteht aus einem elektrisch leitfähigen Material, um die elektrisch leitfähige Verbindung zwischen Steckverbindergehäuse und Kabelanschlusselement zu gewährleisten.

Das erfindungsgemäße Steckverbindergehäuse kann mit einem Anbaugehäuse zusammenwirken. Ein Steckverbinder mit erfindungsgemäßem Anbaugehäuse kann in einen Anbauflansch gesteckt werden. Beim Steckverbinder und Anbaugehäuse handelt es sich um unterschiedliche Bauteile, die demnach auch unterschiedlich verwendet werden. An einen Steckverbinder wird ein Kabel oder werden mehrere Kabel angeschlossen, um ein Gerät oder eine Maschine mit Steuersignalen und/oder einer Betriebsspannung zu versorgen. Ein Anbaugehäuse ist in der Regel an einer Wand einer Maschine oder Ähnlichem befestigt und beispielsweise in der DE 10 2015 106 963 A1 zu sehen. Ein Anbaugehäuse hat einen im Wesentlichen rechteckigen Querschnitt und ist beidseitig offen ausgeführt. Eine Seite, die Geräteanschlussseite, ist zum Gerät bzw. zur Maschine gerichtet. An die andere Seite, die Steckverbinderanschlussseite, ist zur Aufnahme eines Steckverbinders ausgestaltet. Die offene Seite des erfindüngsgemäßen Steckverbinders ist nicht zum Anschluss an einem Gerät oder einer Maschine geeignet.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung eines transparenten Steckverbindergehäuses mit einem Kabelanschlusselement und daran fixierten Kabeln,
- Fig. 2: eine Seitenansicht eines Kabelanschlusselements mit einem angeschlossenem ersten und zweiten Kabel,
- Fig. 3: eine perspektivische Darstellung des Kabelanschlusselements und
- Fig. 4: eine Draufsicht auf ein Steckverbindergehäuse mit einem Kabelanschlusselement und daran fixierten Kabeln.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

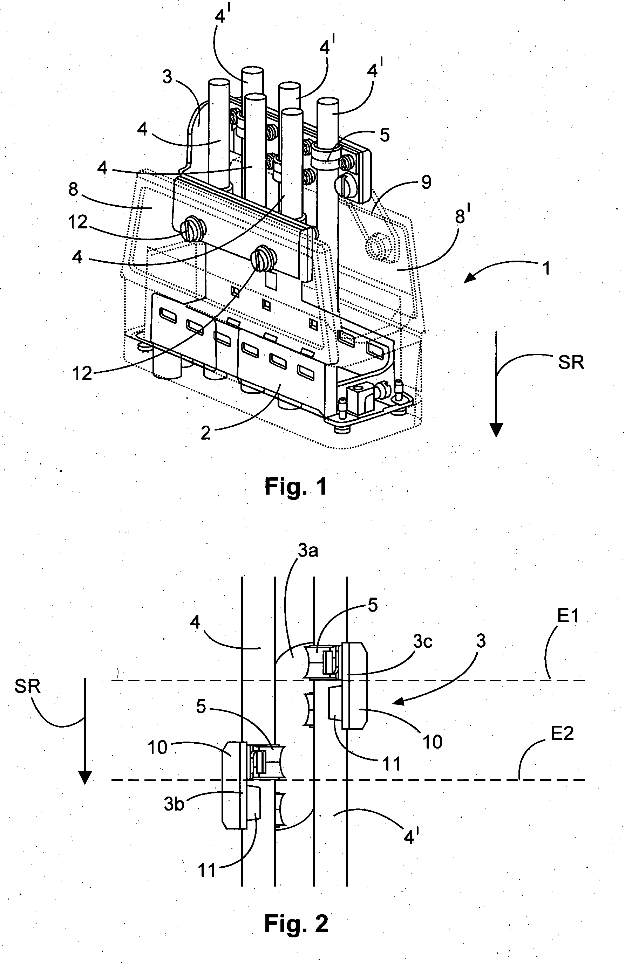

Die Figur 1 zeigt ein erfindungsgemäßes Steckverbindergehäuse 1. Aus darstellerischen Gründen ist das Steckverbindergehäuse transparent dargestellt. In der Realität ist das hier gezeigte Ausführungsbeispiel des Steckverbindergehäuses 1 in einem Druckgussverfahren oder Spritzgussverfahren hergestellt und blickdicht ausgeführt.

In dem Steckverbindergehäuse 1 ist ein Halterahmen 2 für Steckverbindermodule (aus darstellerischen Gründen nicht gezeigt) angeordnet. Aus der Druckschrift EP 0 860 906 B1 ist ein solcher Halterahmen zur Halterung von Steckverbindermodulen und zum Einbau in Steckverbindergehäusen oder zum Anschrauben an Wandflächen bekannt. Dabei sind die Steckverbindermodule in den Halterahmen eingesetzt. An den Steckverbindermodulen sind Halterungsmittel vorgesehen, die mit an gegenüberliegenden Seitenteilen des Halterahmens vorgesehenen Fenstern zusammenwirken, wobei die Fenster in Ausnehmungen bestehen, die als allseitig geschlossene Öffnungen in den Seitenteilen des Halterahmens ausgebildet sind. Der Halterahmen 2 ist nicht Bestandteil des Steckverbindergehäuses.

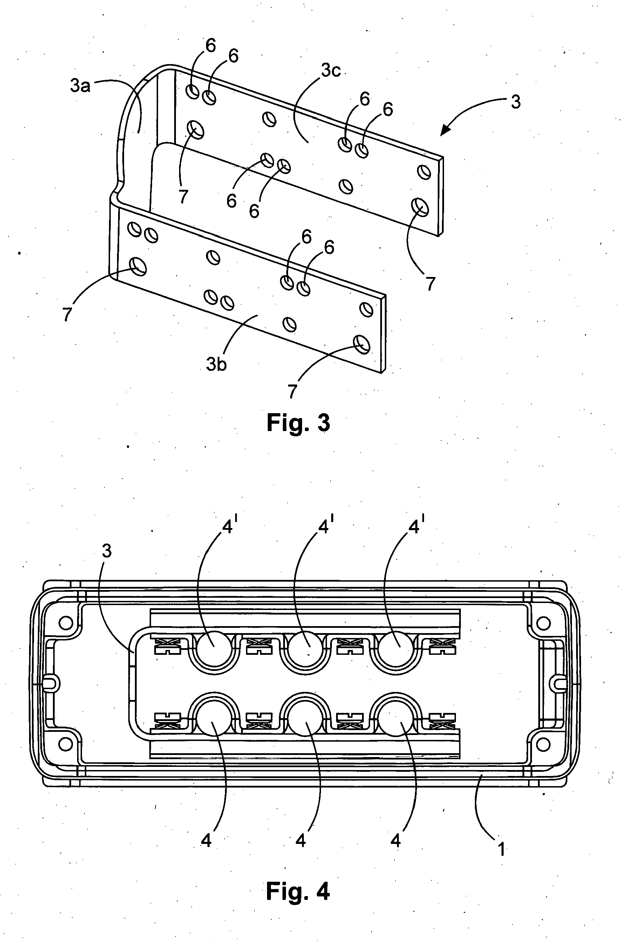

Das Steckverbindergehäuse 1 weist ein Kabelanschlusselement 3 auf. In Figur 3 ist zu erkennen, dass das Kabelanschlusselement 3 aus einem flachen Material mit einer S-förmigen Grundfläche 3a und zwei daran angeformten und senkrecht davon abstehenden Befestigungsflächen 3b, 3c gebildet ist. An den Befestigungsflächen 3b, 3c ist jeweils eine Anschraubplatte 10 mithilfe einer Schraube 11 befestigt. In der Anschraubplatte 10 sind auch die Gewindebohrungen eingebracht mit denen Schellen am Kabelanschlusselement 3 über eine Schraubverbindung fixiert werden. Die Anschraubplatten 10 bestehen aus einem elektrisch leitfähigen Material.

In Figur 2 ist zu sehen, dass an dem Kabelanschlusselement 3 zumindest ein erstes Kabel 4 und zumindest ein zweites Kabel 4' befestigt ist. Die Kabel 4, 4' werden über eine Schelle 5 am Kabelanschlusselement 3 fixiert. Die Schelle 5 ist über eine Schraubverbindung am Kabelanschlusselement 3 befestigt. Dazu sind am Kabelanschlusselement 3 Öffnungen 6, die mit den Gewindebohrungen der Anschraubplatte 10 fluchten, vorgesehen. Durch die Fixierung der Kabel 4, 4' am Kabelanschlusselement 3 wird eine Zugentlastung realisiert.

Das Steckverbindergehäuse 1 hat einen rechteckigen Querschnitt und weist zwei Schmalseiten und zwei Breitseiten auf. Die Breitseiten werden auch als Seitenflächen 8 bezeichnet. Der Grundkörper des Steckverbindergehäuses 1 ist einstückig ausgeführt. Das Steckverbindergehäuse 1 ist steckseitig offen ausgestaltet. Dies hat das Steckverbindergehäuse 1 mit den bekannten Steckverbindergehäusen gemein, da hier eine Schnittstelle zu einem Anbaugehäuse bzw. einem Gegensteckverbinder bereitgestellt werden muss. Kabelanschlussseitig ist das Steckverbindergehäuse 1 ebenfalls offen ausgeführt. Mit offen ist gemeint, dass hier kein Gehäusedeckel mit Kabelabgang, wie bei den bekannten Steckverbindergehäusen, vorgesehen ist. Durch die offene Ausführung des Steckverbindergehäuses 1 ist ein Zugriff auf das Innere des Steckverbindergehäuses 1 möglich. Dadurch wird die Konfektionierung eines Steckverbinders mit einem solchen Steckverbindergehäuse 1 vereinfacht.

Das Kabelanschlusselement 3 wird aus einem flachen Material in einem Stanz-Biegeverfahren hergestellt. Das Kabelanschlusselement 3 hat einen U-förmigen Querschnitt, wie aus Figur 4 zu entnehmen ist. Das Kabelanschlusselement 3 besteht aus einem elektrisch leitenden Material und kann neben der Zugentlastung auch zur Schirmanbindung der angeschlossenen Kabel 4, 4' eingesetzt werden. Dazu wird die Schelle 5 über das Schirmgeflecht (nicht gezeigt) der einzelnen Kabel 4, 4' gelegt und am Kabelanschlusselement 3 festgeschraubt. Auch in diesem Fall ist eine Zugentlastung für das angeschlossene Kabel 4, 4' gewährleistet. Im Kabelanschlusselement 3 sind Öffnungen 7 eingebracht, mit denen das Kabelanschlusselement 3 an den Seitenflächen 8, 8' des Steckverbindergehäuses 1 befestigt werden kann. An den Seitenflächen 8, 8' des Steckverbindergehäuses 1 sind zu den Öffnungen 7 der ersten Befestigungsfläche 3b des Kabelanschlusselement 3 korrespondierende Gewindebohrungen vorhanden. Die zweite Befestigungsfläche 3c des Kabelanschlusselements 3 wird über Stege 9 am Steckverbindergehäuse 1 befestigt.

An das Kabelanschlusselement 3 des Steckverbindergehäuses 1 können mehrere Kabel 4, 4' angeschlossen werden. In Figur 1 sind exemplarisch 6 angeschlossene Kabel 4, 4' gezeigt. Das Kabelanschlusselement 3 kann jedoch beliebig erweitert und die Anzahl der Kabel 4, 4' dadurch, natürlich bauraumabhängig bzw. platzabhängig, beliebig erweitert werden. Durch die S-Form der Grundfläche 3a befinden sich die erste Seitenfläche 3b und die zweite Seitenfläche 3c im eingebauten Zustand auf unterschiedlichen Ebenen. Das Kabelanschlusselement 3 weist unterschiedliche Befestigungsebenen E1, E2 für das zumindest erste Kabel 4 oder für die zumindest ersten Kabel 4 und für das zumindest zweite Kabel oder die zumindest zweiten Kabel 4' auf. Die an der ersten Seitenfläche 3b befestigten Kabel werden in der Sprache der vorliegenden Erfindung als erste Kabel 4 und die an der zweiten Seitenfläche befestigten Kabel als zweite Kabel 4' bezeichnet. Ein Steckverbinder mit einem erfindungsgemäßen Steckverbindergehäuse 1 kann mehrere erste Kabel 4 und mehrere zweite Kabel 4' aufweisen.

Aus den Figuren 1 und 2 ist die Steckrichtung SR des Steckverbindergehäuses 1 bzw. eines Steckverbinders mit einem solchen Steckverbindergehäuse als Pfeil eingezeichnet. Es ist zu erkennen, dass das Kabelanschlusselement 3 zwei einander gegenüberliegende in Steckrichtung versetzt zueinander angeordneten Befestigungsebenen E1, E2 für die anzuschließenden Kabel 4, 4' aufweist. Die ersten Kabel 4 liegen auf der Befestigungsebene E2 und die zweiten Kabel 4' befinden sich auf der Befestigungsebene E1. Die ersten Kabel 4 und die zweiten Kabel 4' sind parallel zueinander ausgerichtet. Durch die Befestigung der Kabel 4, 4' auf unterschiedlichen Ebenen, die parallele Ausrichtung der ersten Kabel 4 zu den zweiten Kabeln 4' und ggf. noch die offene Ausführung des Steckverbindergehäuses 1, kann ein Steckverbinder leicht konfektioniert werden, selbst wenn eine dafür zuständige Person einen Reinraumanzug mit den dazugehörigen Handschuhen trägt.

Bei der Konfektionierung eines Steckverbinders mit einem erfindungsgemäßen Steckverbindergehäuse 1, werden zunächst die an den Steckverbindermodulen oder an einem Kontakteinsatz befindlichen Kabel 4, 4' an das Kabelanschlusselement 3 angeschlossen. Danach kann dieses gesamte System (Steckverbindermodulen oder Kontakteinsatz und Kabel) in das Steckverbindergehäuse 1 eingeschoben werden. Anschließend wird das Kabelanschlusselement 3 über die Schrauben 12 am Steckverbindergehäuse 1 befestigt. Das Steckverbindergehäuse 1 weist dazu entsprechende Befestigungsöffnungen auf. Ob es sich bei dem Steckverbindergehäuse 1 um eine offene oder geschlossene Bauform handelt, ist dafür zweitrangig.

Auch wenn in den Figuren verschiedene Aspekte oder Merkmale der Erfindung jeweils in Kombination gezeigt sind, ist für den Fachmannsoweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

### Bezugszeichenliste

- 1: Steckverbindergehäuse
- 2: Halterahmen
- 3: Kabelanschlusselement

- 4: Kabel; erstes Kabel 4,
- 4': zweites Kabel

- 5: Schelle
- 6: Öffnungen
- 7: Öffnungen
- 8: Seitenfläche
- 9: Steg
- 10: Anschraubplatte
- 11: Schraube
- 12: Schraube

- E1, E2: Ebene

## Patentansprüche

1. Steckverbindergehäuse (1), welches ein Kabelanschlusselement (3) aufweist, an welchem zumindest zwei Kabel, zumindest ein erstes Kabel (4) und zumindest ein zweites Kabel (4'), zur Schirmanbindung und/oder Zugentlastung befestigbar sind, wobei das Kabelanschlusselement (3) aus einem flachen Material mit einer S-förmigen Grundfläche (3a) und daran angeformten und senkrecht davon abstehenden zwei Befestigungsflächen (3b, 3c) gebildet ist, wobei die Befestigungsflächen (3b, 3c) auf unterschiedlichen Befestigungsebenen (E1, E2) angeordnet sind, indem sie in Steckrichtung gesehen versetzt zueinander angeordnet und parallel zueinander ausgerichtet sind, wobei an der ersten Befestigungsfläche (3b) das erste Kabel (4) und an der zweiten Befestigungsfläche (3c) das zweite Kabel (4') fixiert ist.

2. Steckverbindergehäuse nach Anspruch 1
**dadurch gekennzeichnet, dass**
das zumindest erste Kabel (4) und das zumindest zweite Kabel (4') gegenüberliegend anordnenbar sind.

3. Steckverbindergehäuse nach einem der vorstehenden Ansprüche
**dadurch gekennzeichnet,**
**dass** am Kabelanschlusselement (3) mehrere Kabel, mehrere erste Kabel (4) und mehrere zweite Kabel (4'), befestigbar sind und
**dass** die zumindest ersten Kabel (4) gegenüberliegend zu den zumindest zweiten Kabeln (4') anordnenbar sind.

4. Steckverbindergehäuse nach Anspruch 1
**dadurch gekennzeichnet, dass**
an den Befestigungsflächen (3b, 3c) jeweils eine Anschraubplatte (10) befestigt ist.

5. Steckverbindergehäuse nach vorstehendem Anspruch
**dadurch gekennzeichnet, dass**
an den Befestigungsflächen (3b, 3c) jeweils zumindest eine Schelle (5) vorgesehen ist, mit welcher die anzuschließenden Kabel (4, 4') an dem Kabelanschlusselement (3) fixierbar sind.

6. Steckverbindergehäuse nach einem der beiden vorstehenden Ansprüche **dadurch gekennzeichnet,**
- **dass** das Steckverbindergehäuse (1) zumindest zwei gegenüberliegende Seitenflächen (8, 8') aufweist und
- **dass** die erste Befestigungsfläche (3b) des Kabelanschlusselements (3) an einer Seitenfläche (8) und die zweite Befestigungsfläche (3c) des Kabelanschlusselements (3) an der anderen Seitenfläche (8') fixierbar ist.

7. Steckverbindergehäuse nach vorstehendem Anspruch
**dadurch gekennzeichnet, dass**
die zweite Befestigungsfläche (3c) über zumindest einen Steg (9) an der Seitenfläche (8') des Steckverbindergehäuses (1) fixierbar ist.

8. Steckverbindergehäuse nach einem der vorstehenden Ansprüche
**dadurch gekennzeichnet, dass**
das Kabelanschlusselement (3) aus einem elektrisch leitfähigen Material besteht.

## Claims

1. A plug connector housing (1), which has a cable connection element (3) on which at least two cables, at least one first cable (4) and at least one second cable (4') can be fastened for shield connection and/or strain relief,
wherein the cable connection element (3) is formed from a flat material having an S-shaped base area (3a) and two fastening faces (3b, 3c) integrally formed thereon and protruding perpendicularly therefrom.
wherein the two fastening faces (3b,3c) are arranged on two mutually opposing fastening planes (E1,E2), in that they are arranged offset from one another and are parallel to one another, wherein the first cable (4) is fixed on the first fastening face (3b) and the second cable (4') is fixed on the second fastening face (3c).

2. The plug connector housing as claimed in claim 1,
**characterized in that**
the at least first cable (4) and the at least second cable (4') can be arranged opposite one another.

3. The plug connector housing as claimed in one of the preceding claims,
**characterized in that**
a plurality of cables, a plurality of first cables (4) and a plurality of second cables (4') can be fastened on the cable connection element (3) and
the at least first cables (4) can be arranged opposite the at least second cables (4').

4. The plug connector housing as claimed in claim 1,
**characterized in that**
a screw-on plate (10) is fastened on the fastening faces (3b, 3c) in each case.

5. The plug connector housing as claimed in the preceding claim
**characterized in that**
at least one clamp (5) is provided on the fastening faces (3b, 3c) in each case, by means of which clamp the cables (4, 4') to be connected can be fixed on the cable connection element (3).

6. The plug connector housing as claimed in one of the two preceding claims, **characterized in that**
- the plug connector housing (1) has at least two opposing side faces (8, 8') and
- the first fastening face (3b) of the cable connection element (3) can be fixed on one side face (8) and the second fastening face (3c) of the cable connection element (3) can be fixed on the other side face (8').

7. The plug connector housing as claimed in the preceding claims
**characterized in that**
the second fastening face (3c) can be fixed on the side face (8') of the plug connector housing (1) via at least one web (9).

8. The plug connector housing as claimed in one of the preceding claims,
**characterized in that**
the cable connection element (3) is made from an electrically conductive material.

## Revendications

1. Boîtier de connecteur à enfichage (1), lequel possède un élément de raccordement de câble (3) auquel peuvent être fixés au moins deux câbles, au moins un premier câble (4) et au moins un deuxième câble (4'), en vue d'une connexion de blindage et/ou d'une antitraction, l'élément de raccordement de câble (3) étant formé d'un matériau plat ayant une surface de base (3a) en forme de S sur laquelle sont façonnées deux surfaces de fixation (3b, 3c) qui s'écartent perpendiculairement de celle-ci, les surfaces de fixation (3b, 3c) étant disposées sur différents plans de fixation (E1, E2) du fait que, vues dans la direction de l'enfichage, elles sont disposées décalées l'une de l'autre et orientées parallèlement l'une à l'autre, le premier câble (4) étant bloqué au niveau de la première surface de fixation (3b) et le deuxième câble (4') au niveau de la deuxième surface de fixation (3c).

2. Boîtier de connecteur à enfichage selon la revendication 1, **caractérisé en ce que** l'au moins un premier câble (4) et l'au moins un deuxième câble (4') peuvent être disposés en vis-à-vis l'un de l'autre.

3. Boîtier de connecteur à enfichage selon l'une des revendications précédentes, **caractérisé en ce que** plusieurs câbles, plusieurs premiers câbles (4) et plusieurs deuxièmes câbles (4'), peuvent être fixés à l'élément de raccordement de câble (3) et
**en ce que** les au moins premiers câbles (4) peuvent être disposés en vis-à-vis des au moins deuxièmes câbles (4').

4. Boîtier de connecteur à enfichage selon la revendication 1, **caractérisé en ce qu'**une plaque à visser (10) est respectivement fixée aux surfaces de fixation (3b, 3c).

5. Boîtier de connecteur à enfichage selon la revendication précédente, **caractérisé en ce qu'**au moins un collier (5) se trouve respectivement au niveau des surfaces de fixation (3b, 3c), avec lequel les câbles (4, 4') à raccorder peuvent être bloqués au niveau de l'élément de raccordement de câble (3).

6. Boîtier de connecteur à enfichage selon l'une des revendications précédentes, **caractérisé en ce**
- **que** le boîtier de connecteur à enfichage (1) possède au moins deux surfaces latérales (8, 8') en vis-à-vis et
- **que** la première surface de fixation (3b) de l'élément de raccordement de câble (3) peut être bloquée au niveau d'une surface latérale (8) et la deuxième surface de fixation (3c) de l'élément de raccordement de câble (3) au niveau de l'autre surface latérale (8').

7. Boîtier de connecteur à enfichage selon la revendication précédente, **caractérisé en ce que** la deuxième surface de fixation (3c) peut être bloquée au niveau de la surface latérale (8') du boîtier de connecteur à enfichage (1) par le biais d'au moins un élément jointif (9).

8. Boîtier de connecteur à enfichage selon l'une des revendications précédentes, **caractérisé en ce que** l'élément de raccordement de câble (3) se compose d'un matériau électriquement conducteur.
